# EUROPEAN PATENT SPECIFICATION

(11) **EP 2 198 506 B1**
(45) Date of publication and mention of the grant of the patent: **27.12.2017**
(21) Application number: 07827666.4
(22) Date of filing: 05.09.2007
(51) Int. Cl.: H02M 3/335

(54) **MULTIFUNCTION SWITCH-MODE POWER SUPPLY**
MULTIFUNKTIONS-SCHALTNETZTEIL
ALIMENTATION ÉLECTRIQUE À MODE DE COMMUTATION MULTIFONCTIONS

(43) Date of publication of application: 23.06.2010
(73) Proprietor: Bertelli & Partners S.R.L., 37050 Angiari (VR) (IT)
(72) Inventor: BERTELLI, Pierluigi, 37045 Legnago (VR) (IT)
(74) Representative: Ripamonti, Enrico
(86) International application number: PCT/IT2007/000612
(87) International publication number: WO 2009/031168

(56) References cited:
- EP-A1- 0 602 835
- EP-A2- 1 303 032
- DE-A1- 3 837 933
- DE-A1- 3 912 849
- DE-A1- 4 021 385

## Description

The present invention relates to a switch-mode power supply for a gas appliance or for electrical appliances for domestic use in accordance with the introduction to the main claim.

A power supply of this kind is described in DE3912849. Further, DE 4021385 A1 describes a switch-mode power supply. According to this document, a second DC voltage output is provided in order to supply auxiliary devices of the power supply in a simple way. The two DC outputs of the switch-mode power supply according to DE 4021385 A1 are implemented using a flyback configuration of a first secondary winding and a forward configuration of a second secondary winding of a common transformer. In gas appliances (such as a boiler or oven) a switch-mode power supply is known to be often present to generate power for a usual known control circuit for the appliance. Other members of this latter are powered independently, such as the flame sensor or the spark generation circuit, both being usually powered by the electric mains, the former by an RC divider (making the signal deriving therefrom independent of the type of electric mains available), via a mains voltage rectifier for charging a usual discharge capacitor.

It follows that in currently known appliances there are certain "users" or components powered at a voltage different from the control circuit and usually supplied via circuitry connected to the electric mains. This involves a complication in the design and construction of said circuits together with an undeniable increase in their cost, and finally in the overall cost of the target appliance.

An object of the present invention is therefore to provide a switch-mode power supply for use in a gas appliance or in an electrical appliance for domestic use in general which represents an improvement over the already known power supplies used in these applications.

A particular object of the invention is to provide a power supply of the stated type which enables various users or electrical elements of the appliance to be powered, even if operating at voltages which are very different from each other, independently of the electric mains itself.

Another object is to provide a power supply of the stated type which results in an increase in the performance and a reduction in the costs of the target appliance.

These and other objects which will be apparent to the expert of the art are attained by a switch-mode power supply in accordance with the accompanying claims.

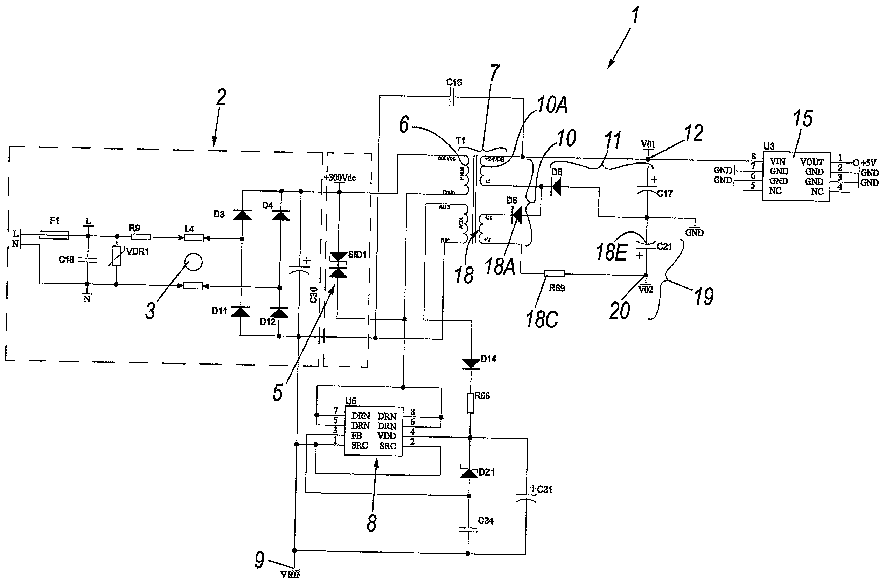

The present invention will be more apparent from the accompanying drawing, which is provided by way of non-limiting example and in which the single figure represents a circuit diagram of a power supply according to the invention.

With reference to said figure, a switch-mode power supply for a gas appliance or for an electrical appliance for domestic use is indicated overall by 1 and comprises a first circuit portion 2 connected to an electrical supply line (for example the usual electric mains of an environment in which the appliance is present). This circuit portion 2, comprising a capacitor, resistors and diodes (as visible from the figure), acts as a rectifier and filter block for the alternating current signal of the supply line. This block also comprises a usual high frequency filter 3 of known type for preventing generation of electric mains disturbances.

Downstream of the block 2, after a circuit part 5 acting as a current reversal limiter, the primary 6 of a transformer 7 is present, connected to a control oscillator circuit 8 connected to a reference voltage 9. In the embodiment of the invention under examination, the secondary 10 of the transformer 7 is connected, via its first part 10A, to a circuit branch 11 defining a flyback converter configuration of known type.

A low-value d.c. voltage, for example 24V, can be obtained from a point 12 of the branch 11 for use in powering a usual boiler control circuit. A usual voltage regulator 15 is connected to this branch.

According to the invention, the secondary winding 10 and a further auxiliary winding 18 (having a circuit part comprising at least one diode 18A, a capacitor 18B and possibly a resistor 18C) are connected to a circuit branch 19, to be able to be used in a known forward converter configuration.

The secondary winding 18 is used to generate a higher auxiliary voltage. This branch is connected to the aforesaid branch 12.

From a point 20 of this branch a high d.c. voltage can be obtained, between for example 50 and 300V and selectively selectable therebetween (by known methods), for use in powering various users or electrical members of the appliance. For example, this voltage can be converted into square wave alternating current to power the usual flame presence sensor, or the voltage be used to power the usual electric circuit for generating the spark used to ignite the fuel (gas mixture) fed into the appliance. As this voltage is proportional to the mains voltage, this fact enables it to be used, via a suitable known (but not shown) control circuit, for protecting the electrical components of the appliance against overvoltages and/or undervoltages or for correcting functional parameters of these components on the basis of the mains voltage, or for modifying (preventing) operation of the appliance, etc.

By virtue of the invention, using a single power supply configuration, various electrical members and sensors of the appliance can be powered even if operating at very different voltages from each other. The invention also results in increased performance of the appliance in which it is installed.

This also enables the electronic circuit of the target appliance to be simplified, whether this is a gas appliance or an electrical appliance for domestic use, and allows a reduction in its production cost to be obtained.

Various preferred embodiments of the invention have been described and mentioned. However others are possible in the light of the aforegoing description and are to be considered as falling within the scope of the following claims.

## Claims

1. A switch-mode power supply (1) for a gas appliance or an electric appliance for domestic use, the switch-mode power supply (1) comprising a rectifier and filter block (2) connected to a mains supply, and a transformer (7) the primary winding (6) of which is connected to a control circuit (8), for example an oscillator circuit, and of which the secondary winding (10) is connected to a control circuit of said appliance, said secondary winding being connected to an electrical circuit branch (11) defining a flyback configuration, to enable a low voltage signal to be generated for feeding said appliance control circuit, said switch-mode power supply (1) comprising a further electrical circuit branch (19) connected to said secondary winding in order to enable the secondary winding (10) to be used in a forward circuit configuration, said further electrical circuit branch (19) generating a high voltage, the further electrical circuit branch (19) in forward configuration comprising a further winding or auxiliary winding (18) of the secondary winding (10) of the transformer (7), **characterized in that** said auxiliary winding (18) is in a circuit portion comprising at least a diode (18A) located between a first part (10A) of the secondary winding (10) and the auxiliary winding (18) of the latter (10), a capacitor (18E) and possibly a resistor (18C) connected to the further electrical circuit branch (19).

2. A power supply as claimed in claim 1, **characterised in that** the voltage generated by the further electrical circuit branch (19) in forward configuration has a value selectively selectable for example between 50 and 300V.

3. A power supply as claimed in claim 1, **characterised in that** the further electrical circuit branch (19) in forward configuration is connected to the circuit branch (11) in flyback configuration.

4. A power supply as claimed in one or more of the preceding claims, **characterised by** being associated with a gas appliance in which the voltage generated by said further electrical circuit branch (19) is used to power at least one further electrical member of said appliance.

5. A power supply as claimed in claim 4, **characterised in that** the further electrical member of the appliance is a spark generator.

6. A power supply as claimed in claim 4, **characterised in that** the further electrical member of the appliance is a flame presence sensor.

7. A power supply as claimed in claim 4, **characterised by** being associated with an electrical appliance for domestic use.

8. A power supply as claimed in claim 1, **characterised by** being associated with a gas appliance in which a per se known control circuit receives the voltage generated by said further circuit branch and, on the basis of said voltage, protects the electrical components of the appliance against undesirable voltage variations such as undervoltages and/or overvoltages and to correct the functional parameters and/or to modify the operation of the target appliance on the basis of the mains voltage.

## Patentansprüche

1. Ein Schaltnetzteil (1) für ein Gas- oder Elektrogerät für Haushaltszwecke, wobei das Schaltnetzteil (1) einen Gleichrichter und Filterblock (2) aufweist, welcher an die Netzstromversorgung angeschlossen ist, sowie einen Transformator (7), dessen Primärwicklung (6) mit einem Steuerschaltkreis (8) angeschlossen ist, zum Beispiel einer Oszillator-Schaltung, und dessen Sekundärwicklung (10) mit einem Steuerschaltkreis des genannte Geräts angeschlossen ist, wobei die genannte Sekundärwicklung an eine Abzweigschaltung (11) angeschlossen ist, welche eine Rücklaufkonfiguration bildet, um ein Niederspannungssignal zur Speisung des genannten Steuerschaltkreis des Geräts erzeugen zu lassen, wobei das genannte Schaltnetzteil (1) eine weitere Abzweigschaltung (19) umfasst, welche mit der genannten Sekundärwicklung angeschlossen ist, um die Sekundärwicklung (10) in die Lage zu versetzen, in einer Vorwärtsstromkreis-Konfiguration angewendet zu werden, wobei die genannte zusätzliche Abzweigschaltung (19) Hochspannung erzeugt und die zusätzliche Abzweigspannung (19) in Vorwärtsstrom-Konfiguration jeweils eine weitere Wicklung oder Hilfswicklung (18) der Sekundärwicklung (10) die Transformators (7) umfasst, **dadurch gekennzeichnet, dass** die genannte Hilfswicklung (18) sich in einem Schaltkreisabschnitt befindet, der mindestens eine Diode (18A) umfasst, welche jeweils zwischen einem ersten Teil (10A) der Sekundärwicklung (10) und der Hilfswicklung (18) der letzteren (10) angeordnet ist, einen Kondensator (18E) und möglichst einen Widerstand (18C), welcher an die zusätzliche Abzweigschaltung (19) angeschlossen ist.

2. Ein Netzteil gemäß Anspruch 1, **dadurch gekennzeichnet, dass** die Spannung, die durch die zusätzliche Abzweigspannung (19) in Vorwärtsstrom-Konfiguration erzeugt wird, einen selektiv wählbaren Wert von beispielsweise zwischen 50 und 300 V aufweist.

3. Ein Netzteil gemäß Anspruch 1, **dadurch gekennzeichnet, dass** die zusätzliche Abzweigschaltung (19) in Vorwärtsstrom-Konfiguration mit der Abzweigschaltung (11) in Rücklaufkonfiguration angeschlossen ist.

4. Ein Netzteil gemäß einem oder mehreren der vorausgegangenen Ansprüche, **dadurch gekennzeichnet, dass** es mit einem Gasgerät verbunden ist, bei dem die Spannung, welche durch die genannte zusätzliche Abzweigschaltung (19) erzeugt wird, verwendet wird, um mindesten ein weiteres Stromteil des genannten Geräts mit Energie zu versorgen.

5. Ein Netzteil gemäß Anspruch 4, **dadurch gekennzeichnet, dass** das weitere Stromteil des Geräts ein Zündfunkengeber ist.

6. Ein Netzteil gemäß Anspruch 4, **dadurch gekennzeichnet, dass** das weitere Stromteil des Geräts ein Flammenfühler ist.

7. Ein Netzteil gemäß Anspruch 4, **dadurch gekennzeichnet, dass** es mit einem Elektrogerät für Haushaltszwecke verbunden ist.

8. Ein Netzteil gemäß Anspruch 1, **dadurch gekennzeichnet, dass** es mit einem Gasgerät verbunden ist, bei dem ein an sich bekannter Steuerschaltkreis die Spannung empfängt, welche von der genannten zusätzlichen Abzweigschaltung erzeugt wird und aufgrund der genannten Spannung die elektrischen Komponenten des Geräts gegen unerwünschte Spannungsvariationen wie Unterspannungen und/oder Überspannungen schützt, und um die Funktionsparameter zu korrigieren und/oder den Betrieb des Zielgeräts aufgrund der Netzspannung zu ändern.

## Revendications

1. Alimentation électrique à mode de commutation (1) pour un appareil à gaz ou un appareil électrique à usage domestique, l'alimentation électrique à mode de commutation (1) comprenant un bloc de redresseur et filtre (2) connecté à un reseau electrique, et un transformateur (7) dont l'enroulement primaire (6) est connecté à un circuit de commande (8), par exemple un circuit d'oscillateur, et dont l'enroulement secondaire (10) est connecté à un circuit de commande dudit appareil, ledit enroulement secondaire étant connecté à une branche de circuit électrique (11) définissant une configuration de retour, pour permettre de générer un signal basse tension pour alimenter ledit circuit de commande d'appareil, ladite alimentation électrique à mode de commutation (1) comprenant une autre branche de circuit électrique (19) connectée audit enroulement secondaire de manière à permettre l'utilisation de l'enroulement secondaire (10) dans une configuration de circuit directe, ladite autre branche de circuit électrique (19) générant une haute tension, l'autre branche de circuit électrique (19) en configuration directe comprenant un autre enroulement ou enroulement auxiliaire (18) de l'enroulement secondaire (10) du transformateur (7), **caractérisée en ce que** ledit enroulement auxiliaire (18) est dans une portion de circuit comprenant au moins une diode (18A) située entre une première partie (10A) de l'enroulement secondaire (10) et l'enroulement auxiliaire (18) de ce dernier (10), un condensateur (18E) et éventuellement une résistance (18C) connectée à l'autre branche de circuit électrique (19).

2. Alimentation électrique selon la revendication 1, **caractérisée en ce que** la tension générée par l'autre branche de circuit électrique (19) en configuration directe a une valeur sélectionnable de manière sélective par exemple entre 50 et 300 V.

3. Alimentation électrique selon la revendication 1, **caractérisée en ce que** l'autre branche de circuit électrique (19) en configuration directe est connectée à la branche de circuit (11) en configuration de retour.

4. Alimentation électrique selon une ou plusieurs des revendications précédentes, **caractérisée en ce qu'**elle est associée à un appareil à gaz, dans lequelle la tension générée par ladite autre branche de circuit électrique (19) est utilisée pour alimenter au moins un autre élément électrique dudit appareil.

5. Alimentation électrique selon la revendication 4, **caractérisée en ce que** l'autre élément électrique de l'appareil est un générateur d'étincelle.

6. Alimentation électrique selon la revendication 4, **caractérisée en ce que** l'autre élément électrique de l'appareil est un capteur de présence de flamme.

7. Alimentation électrique selon la revendication 4, **caractérisée en ce qu'**elle est associée à un appareil électrique à usage domestique.

8. Alimentation électrique selon la revendication 1, **caractérisée en ce qu'**elle est associée à un appareil à gaz dans lequel un circuit de commande connu en soi reçoit la tension générée par ladite autre branche de circuit et, sur la base de ladite tension, protège les composants électriques de l'appareil contre des variations de tension indésirables telles que des sous-tensions et/ou des surtensions et pour corriger les paramètres fonctionnels et/ou modifier le fonctionnement de l'appareil cible sur la base de la tension secteur.
